# DEMANDE DE BREVET EUROPEEN

(11) **EP 4 684 859 A1**
(43) Date de publication de la demande: **28.01.2026**
(21) Numéro de dépôt: 25187644.7
(22) Date de dépôt: 04.07.2025
(51) Int. Cl.: B01D 29/07, B01D 29/52, B01D 29/54, B01D 35/12, B01D 35/147, B01D 35/153

(54) **DISPOSITIF DE FILTRATION D'HUILE POUR TRANSMISSION, POURVU D'UNE VANNE DE SÉLECTION DE MÉDIA FILTRANT**

(30) Priorité: 26.07.2024 FR 2408307
(71) Demandeur: Purflux Filtration, 78280 Guyancourt (FR)
(72) Inventeur: MONSALLIER, Guy, 50400 Granville (FR); ALCALAY, Clément, 61800 Tinchebray-Bocage (FR); LE MOUELLIC, Bruno, 14500 Vire (FR)
(74) Mandataire: Plasseraud IP

(57) **Abrégé**

Le dispositif de filtration (1), en tant que filtre de transmission épure par un média une huile aspirée vers un dispositif de transmission. Le boîtier (2) porte une vanne avec un corps répartiteur, en incluant une partition intérieure, afin de faire communiquer l'entrée (3) soit avec une première zone d'amont (Z1) pour une filtration par un premier média (M1) interne, soit avec une deuxième zone d'amont (Z1') pour une filtration par un deuxième média (M2) interne séparé du premier média. La vanne est à commande active pour déplacer sélectivement un élément obturateur (7) dans une interface d'entrée (15) en fonction d'un paramètre détecté typiquement par un capteur. Un élément de cloison (2c) du boîtier peut compléter une cloison (6c) prévue entre les médias (M1, M2) dans une structure de support commune d'un insert ou ensemble filtrant. La sortie (4) communique avec une zone d'aval commune à ces deux médias.

## Description

### Domaine technique

La présente divulgation relève du domaine des filtres à lubrifiant pour véhicule motorisé, notamment les filtres à huile destinés à une transmission prévue dans un véhicule. L'invention concerne plus particulièrement un dispositif de filtration d'huile/lubrifiant incluant une vanne de sélection de média filtrant.

### Arrière-plan technologique

Pour la protection du ou des circuit(s) de lubrification des engrenages de boîte de transmission/boîte de vitesse et autres composants mécaniques, un filtre à lubrifiant du type filtre d'aspiration / à succion peut être prévu.
L'excès de chaleur est éliminé par le lubrifiant qui s'écoule sur les différents composants. Ce lubrifiant s'écoule généralement par gravité dans un carter/bac. La présence de contaminants dans un tel lubrifiant est indésirable, pour éviter des défaillances telles que le blocage des soupapes. C'est pourquoi les transmissions sont souvent équipées de filtres généralement proches du ou prévus dans le bac à huile de boîte de vitesses ou dispositif de transmission. Une pompe de transmission aspire le liquide du bac et envoie le liquide sous pression à un corps de valve, qui distribue le liquide à divers endroits de la transmission à des pressions appropriées aux différentes fonctions.

Dans des environnements encombrés, la conception du dispositif de filtration doit être compatible avec un faible espace d'installation. Le boîtier de filtre associé à une unité de filtrage de l'huile d'aspiration comporte généralement une coque supérieure et une coque inférieure, un média filtrant étant maintenu entre les deux coques. La durée de vie du filtre peut être augmentée en proposant un média de filtration plissé, sans pour autant augmenter la longueur de la chambre de filtration.

Étant donné qu'un flux volumique d'huile minimum doit traverser le filtre d'aspiration d'huile lorsque la viscosité de l'huile est élevée et/ou lorsque la température de l'huile est basse, ceci afin d'assurer une lubrification suffisante d'une transmission, le choix du média filtrant plissé est souvent fait avec une performance de filtration relativement faible.
Cependant, des tolérances étroites doivent être maintenues, ce qui impose des exigences élevées à la technologie de fabrication. Étant donné qu'un flux volumique d'huile minimum doit en outre traverser le filtre d'aspiration d'huile lorsque la viscosité de l'huile est élevée et/ou lorsque la température de l'huile est basse pour assurer une lubrification suffisante d'un moteur ou d'une transmission, seule une performance de filtration relativement faible peut être obtenue à l'aide du filtre.

Il est connu, par le document US 7998347 B2, d'obtenir un bon compromis entre la perte de charge, la performance de filtration et l'adaptation à l'environnement d'intégration en proposant une solution qui combine deux moyens ou médias de filtration dans une même chambre de filtration, avec une répartition du flux d'huile admis entre deux entrées concentriques, ce qui permet une filtration dans différentes zones par deux médias filtrants séparés. Un inconvénient d'un tel agencement filtrant avec structure de répartition des flux et recours à plusieurs couches de filtration est que lorsque les médias sont très différents, l'un des médias peut s'avérer inadapté, limitant l'efficacité globale de filtration. Le document US 2013/146526 A1 décrit également un filtre intégrant deux médias dans une même chambre de filtration.

On connait par ailleurs, par le document JP H11 319436 A, l'intégration dans un boîter de filtration d'un élément plat de séparation qui se décompose en deux zones complémentaires, pour disposer de deux niveaux de filtration dont l'un correspond à un média grossier. Entre l'entrée du boîtier et la zone à faible niveau de filtration, une plaque d'obstruction, à profil courbé, a un effet barrière pour ne permettre que la filtration sur le média le plus fin, tant que la pression en zone amont n'est pas excessive. Le profil courbé peut cependant fléchir (la plaque d'obstruction étant déformable) pour créer un surplus de volume dans la zone amont et permettre aussi le passage pas le média grossier, en situation de surpression dépassant un seuil. Ici également, un média peut s'avérer inadapté aux circonstances, avec en outre l'inconvénient que le média le plus fin occupe une large section de passage dans tous les cas.

Un autre document US 2015/265950 A1, utilisant dans une chambre de filtration deux zones ayant des niveaux de filtration différents, prévoit une partie mobile, comme une vanne, permettant d'agrandir un des passages permettant d'évacuer le flux filtré par le média le plus grossier, cet agrandissement étant effectué - éventuellement de manière contrôlée - dans la zone d'aval opposée à l'entrée du boîter du filtre. Ici encore, il existe l'inconvénient que le média le plus fin occupe une large section de passage dans tous les cas.

### Résumé

La présente divulgation vient améliorer la situation.

A cet effet, il est proposé un dispositif de filtration de lubrifiant, en particulier filtre de transmission, disposant d'un ensemble ou insert filtrant qui est de préférence allongé suivant une direction axiale, le dispositif comprenant :
- un boîtier délimitant un volume intérieur, le boîtier étant pourvu d'une entrée et d'une sortie ;
- un premier média de filtration disposé dans le volume intérieur ;
- un deuxième média de filtration disposé dans le volume intérieur ;
- dans le volume intérieur, deux zones d'amont (en amont de la filtration) en communication avec l'entrée, en incluant une première zone d'amont permettant au lubrifiant de rejoindre une face d'entrée dudit premier média depuis l'entrée, et une deuxième zone d'amont permettant au lubrifiant de rejoindre une face d'entrée dudit deuxième média depuis l'entrée ;
- une séparation séparant le premier média de filtration du deuxième média de filtration en séparant de façon étanche la première zone d'amont de la deuxième zone d'amont ; et
- dans le volume intérieur, au moins une zone d'aval en communication avec la sortie et permettant au lubrifiant filtré par l'un ou l'autre des premier et deuxième médias de filtration de circuler jusqu'à la sortie ;

le deuxième média de filtration présentant une structure et/ou au moins une propriété de filtration différente du premier média de filtration,
avec la particularité que le dispositif comporte une vanne de sélection pour la sélection de l'un parmi le premier média de filtration et le deuxième média de filtration, la vanne disposant d'un corps répartiteur et étant :
   - intégrée dans une interface d'entrée, qui inclut l'entrée et le corps répartiteur pour faire communiquer, par exemple sélectivement, l'entrée avec l'un ou l'autre de deux débouchés divergents prévus dans l'interface d'entrée ;
   - pourvue d'une liaison avec un module de contrôle et commandée de manière active via cette liaison ; et
   - pourvue d'un élément obturateur, porté par le boîtier et/ou par ledit ensemble ou insert filtrant, l'élément obturateur étant mobile pour permettre alternativement d'obturer et libérer un passage d'accès, qui est un premier des deux débouchés, permettant l'accès sélectif à l'une parmi la première zone d'amont et la deuxième zone d'amont.

Le module de contrôle peut être un module de contrôle électronique ou tout module adapté pour délivrer activement une commande électrique ou mécanique. Un capteur est typiquement en liaison avec le module, le capteur pouvant être porté par le dispositif ou par un réservoir qui intègre le dispositif. Un tel capteur mesure par exemple un paramètre physico-chimique du lubrifiant. La sélection du média peut correspondre à une utilisation exclusive du média, sans permettre de filtration au travers de l'autre média.
Dans certaines alternatives, une dérivation partielle peut être réalisée pour l'un des médias, éventuellement pour le média sélectionné à l'aide de la vanne, le cas échéant avec un passage de lubrifiant minime vers le média non sélectionné du fait d'une absence d'étanchéité parfaite pour obturer le passage menant au média non sélectionné.

Avec cet agencement, il peut être prévu un premier média, pour les conditions normales d'utilisation, et un deuxième média, pour des conditions dégradées (par temps froid par exemple), qui va fonctionner sélectivement par un effet de dérivation permis par la vanne. Les deux médias ne fonctionnent pas en série (l'un à la suite de l'autre) et, lorsque l'élément obturateur est conçu pour fermer complètement un accès à l'une des deux zones amont dans un mode de fonctionnement particulier, ils ne réalisent pas non plus des filtrations simultanées en parallèle. Le dispositif de filtration permet alors le recours à une large gamme de choix pour le premier média filtrant, par exemple plissé en offrant une grande surface de filtration et/ou une grande performance de filtration.
Avantageusement, on comprend qu'il est permis de faire communiquer l'entrée, soit avec la première zone d'amont, soit avec la deuxième zone d'amont, de sorte que le lubrifiant n'est filtré que par l'un des médias (qui est fonction de la sélection opérée à l'aide de la vanne de sélection), le boîtier comportant une partition intérieure à cet effet, dont au moins une partie appartient au corps répartiteur de la vanne.

Le mode de cloisonnement pour obtenir deux chambres de filtration peut être obtenu sans nécessité de cloisonnement interne complexe pour guider le flux de lubrifiant, en prévoyant d'intégrer les deux médias dans un même insert ou ensemble de filtration pourvu d'un cadre périphérique commun ou d'une structure de support commune. Les médias peuvent être portés par une structure ou un cadre qui est séparable du boîtier. Ceci limite la complexité du boîtier et on peut prévoir de réutiliser une vanne après une opération de rechange de l'insert ou ensemble filtrant, amovible par rapport au boîtier.
Le boîtier peut être pourvu de deux composants de boîtier complémentaires, réalisés chacun en une seule pièce plastique, tandis que le cadre ou support de l'insert filtrant peut être réalisé en une seule pièce.

Avantageusement, le flux brut à filtrer par le premier média de filtration peut entrer dans un premier compartiment (formant une première chambre de filtration) suivant au moins une première direction, tandis que le flux brut à filtrer, acheminé vers le deuxième média de filtration, est dirigé suivant au moins une deuxième direction divergente par rapport à l'au moins une première direction. En cas de besoin de s'adapter à la fois à des conditions dégradées (si la température d'huile est basse) tout en limitant la perméabilité vis-à-vis de particules solides, il peut alors être prévu un média différent pour le deuxième moyen de filtration, par exemple un média ayant une finesse de filtration supérieure (ou inversement) par rapport au média du premier moyen de filtration.

Les médias de filtration peuvent présenter chacun un format sensiblement rectangulaire, avec une même direction pour les plis réalisés dans les médias. D'autres formes avec deux bords parallèles joints à parois parallèles de l'insert ou ensemble de filtration peuvent être utilisées.
L'élément de cloison séparant les deux médias peut être perpendiculaire à la direction des plis.

Les deux médias peuvent être indépendants, en fonctionnant de manière complètement séparée. Les deux médias sont par exemple des médias plissés (par exemple en comprenant au moins 10 plis ou au moins 20 plis), éventuellement en présentant une même profondeur tel que mesurée entre le niveau des lignes de fond avec pliage (ces lignes de fond étant typiquement coplanaires) et le niveau des crêtes (ces crêtes étant typiquement coplanaires). Les plis sont perpendiculaires à la direction axiale.

Dans des exemples de réalisation, on peut prévoir pour le dispositif que :
- la position d'obturation du passage d'accès par l'élément obturateur est obtenue comme une première configuration de sélection de la vanne.
- la première configuration de sélection de la vanne, qui peut correspondre à une position initiale, diffère d'une deuxième configuration de la vanne par la position de l'élément obturateur dans l'interface d'entrée.
- la première configuration de sélection de la vanne, est obtenue/obtenue à nouveau en réponse à une commande active délivrée via la liaison.
- la commande active est délivrée en fonction d'un signal ou élément d'information fourni par un capteur de température et/ou un capteur de pression.
- le capteur peut faire partie du module de contrôle (module de contrôle électronique) ou être relié à celui-ci.
- l'élément obturateur est déplaçable, en réponse à une autre commande active délivrée via la liaison, depuis la position d'obturation dudit passage d'accès formant le premier débouché vers une autre position pour l'obturation du deuxième débouché des deux débouchés, cette autre position étant obtenue comme une deuxième configuration de sélection de la vanne.
- cette autre commande est délivrée lorsqu'un signal ou élément d'information est fourni au module de contrôle électronique par un capteur de température et/ou un capteur de pression.

Lorsqu'un capteur de température est présent, la commande active peut être réalisée de sorte que la filtration réalisée par le dispositif soit faite au travers de celui des deux médias qui a une finesse moins élevée, dès qu'une température mesurée par le capteur se situe en dessous d'un seuil de température. Le capteur de température peut être situé dans l'entrée, dans l'interface d'entrée ou de façon à mesurer une température représentative de la température du lubrifiant au niveau de l'entrée ou d'un réservoir rempli du lubrifiant admis par l'entrée.

Lorsqu'un capteur de pression est présent, la commande active peut être réalisée de façon à ce que la filtration réalisée par le dispositif soit faite au travers de celui des deux médias qui a une finesse moins élevée, dès qu'une pression mesurée par le capteur se situe au-dessus d'un seuil de pression. Le capteur de pression peut être situé dans l'entrée, dans l'interface d'entrée ou de façon à mesurer une pression représentative de la température du lubrifiant au niveau de l'entrée ou d'un réservoir rempli du lubrifiant admis par l'entrée.
Dans certaines variantes, un capteur de débit (par exemple situé au niveau de la sortie du dispositif) peut être utilisé pour permettre d'initier une commande. Cela peut permettre de détecter une insuffisance de débit, éventuellement par comparaison avec un seuil (cette comparaison pouvant être permise par le module de contrôle).

La séparation peut inclure une jonction entre le boîtier et l'ensemble ou insert filtrant, de façon à former une paroi ou partie de cloisonnement qui s'étend de l'un à l'autre de deux composants de boîtier. Dans des réalisations, indépendamment ou en complément de ce qui précède, on peut avoir recours à l'une et/ou l'autre des dispositions suivantes :
- une cloison de ladite séparation est allongée suivant la direction axiale et appartient à l'ensemble ou insert filtrant qui est monté dans le volume intérieur.
- l'ensemble ou insert filtrant peut être rigidement fixé à un couvercle du boîtier qui est mobile pour être détachée d'un composant de boîtier complémentaire du couvercle.
- le boîtier comporte un composant de boîtier qui présente une paroi latérale périphérique qui s'étend autour du volume intérieur, en incluant en outre un élément de cloison (typiquement en saillie à l'intérieur du boîtier, par exemple en saillie verticalement à l'état monté du dispositif, de préférence vers le haut) appartenant à ladite séparation.
- l'élément de cloison est complémentaire de la cloison pour séparer un premier compartiment du boîtier recevant le lubrifiant admis via le passage d'accès formant le premier débouché, d'un deuxième compartiment du boîtier recevant le lubrifiant admis par le deuxième débouché.
- les deux compartiments sont parallèles, en étant par exemple de même longueur et/ou allongés suivant la direction axiale.
- l'entrée fait partie du composant de boîtier, tandis que l'ouverture fait partie du couvercle.
- le composant de boîtier est réalisé d'une seule pièce et/ou le couvercle est réalisé d'une seule pièce.

Dans des exemples de réalisation de la vanne, une ou plusieurs des dispositions suivantes peuvent s'appliquer :
- l'élément obturateur est sous forme d'un clapet coulissant entre deux positions.
- l'élément obturateur est déplacé à l'aide d'une électrovanne ou d'un organe d'entraînement couplé à une partie thermosensible ou sensible à la pression.
- le clapet/élément obturateur coulisse suivant un déplacement transverse par rapport à une direction d'écoulement du lubrifiant au travers de l'entrée.
- un guide de l'élément obturateur peut être formé dans l'entrée ou dans l'interface d'entrée pour réaliser un guidage linéaire.
- la vanne peut inclure un guide fixe du déplacement de l'élément obturateur, le guide incluant l'un parmi une tige et un conduit tubulaire de guidage.

Selon une particularité, le boîtier comporte une coque supérieure incluant la sortie et formant un couvercle. L'entrée peut être prévue sur une coque inférieure, optionnellement adaptée pour délimiter/délimitant l'une et l'autre des première et deuxième zone d'amont. L'élément obturateur est par exemple monté coulissant dans la coque inférieure, qui forme de préférence un composant de fond du boîtier.

Que le boîtier soit formé d'une coque inférieure et d'une coque supérieure ou par un autre assemblage, l'entrée et la sortie peuvent être disposées de part et d'autre d'un plan de jonction entre deux parties du boîtier. Ce plan de jonction peut être le plan de jonction/connexion entre la coque supérieure et la coque inférieure.

Selon une particularité, lequel le corps répartiteur de la vanne définit une entrée qui est par exemple sous forme de conduit qui inclut une séparation intérieure pour former les deux débouchés avec une même orientation générale, la séparation intérieure étant coplanaire avec la séparation.
Alternativement, le corps répartiteur de la vanne présente deux parois :
- qui délimitent entre elles une antichambre, formée dans le volume intérieur ;
- dont l'une inclut le premier débouché et l'autre inclut le deuxième débouché qui a une orientation divergente de l'orientation du premier débouché.

Une paroi transverse peut former un support commun aux deux médias de filtration, en s'étendant (transversalement dans le boîtier) par exemple d'une extrémité qui rejoint la paroi du corps répartiteur avec le premier débouché à une autre extrémité qui rejoint la paroi du corps répartiteur avec le deuxième débouché.
Le corps répartiteur peut être réalisé d'une seule pièce, possiblement venu de matière avec un composant de boîtier qui inclut tout ou partie de la séparation.
Le corps répartiteur peut être réalisé sous forme d'un ensemble de plusieurs pièces.

Selon une particularité, le premier média de filtration et le deuxième média de filtration sont séparables l'un de l'autre au sein de l'ensemble ou insert filtrant, qui peut optionnellement inclure deux cadres séparables, en étant juxtaposés l'un à côté de l'autre dans un état monté de l'ensemble ou insert filtrant dans le volume intérieur. Cette disposition peut éventuellement être prévue, tout en ayant une conception de l'ensemble ou insert lui permettant d'être séparable du boîtier en s'extrayant d'un seul tenant. Alternativement, l'extraction/séparation vis-à-vis d'un composant de boîtier peut se faire sélectivement en retirant un seul de ces médias.
Dans certaines variantes, le premier média de filtration et le deuxième média de filtration sont inséparables/rendus inséparables et appartiennent à l'ensemble ou insert filtrant, qui présente une structure de support unique commune aux deux médias.

Dans une option, le premier média de filtration forme une première face extérieure de l'insert et permet à du lubrifiant circulant dans l'insert filtrant d'être filtré en sortant du volume intérieur par la première face extérieure qui a une première orientation, tandis que le deuxième média de filtration forme une deuxième face extérieure de l'insert et permet à du lubrifiant circulant d'être filtré en sortant du volume intérieur par la deuxième face extérieure qui a une deuxième orientation apte à être opposée à la première orientation.
Dans une autre option, le premier média de filtration et le deuxième média de filtration sont juxtaposé latéralement en formant des faces respective de sortie du lubrifiant purifié qui sont parallèles (avec une même orientation).

Le premier média de filtration et le deuxième média de filtration peuvent être conçus séparément à partir de différents matériaux de filtration, par exemple de sorte qu'un de ces médias de filtration à une finesse de filtration supérieure à l'autre.
Eventuellement, la structure des deux médias est différente, avec par exemple un média moins étiré ou allongé que l'autre suivant la direction axiale.
Dans des formes de réalisation, un seul parmi le premier média de filtration et le deuxième média de filtration peut s'étendre de façon sensiblement plane, sans former une pluralité de plis.

Le dispositif de filtration peut comporter une partie d'étanchéité annulaire disposée sur une périphérie de l'ensemble ou insert filtrant, par exemple pour venir en contact contre le boîtier, de sorte que la partie d'étanchéité annulaire entoure à la fois le premier média et le deuxième média.
L'ensemble ou insert filtrant présente un cadre rigide, de préférence rectangulaire, formant une périphérie. La séparation peut inclure une cloison qui divise le cadre en deux sous-cadres. Le cadre inclut un matériau plastique pour former un support de soudure et/ou de fixation mécanique pour le raccordement : d'un bord du premier média de filtration ; et d'un bord du deuxième média de filtration.

Dans des modes de réalisation la vanne de sélection est une vanne à commande active pourvue d'un actionneur du déplacement de l'élément obturateur, l'actionneur pouvant être choisi parmi :
- un actionneur de déplacement sensible à la température ;
- un actionneur de déplacement sensible à la pression ;
- un actionneur de déplacement à commande électrique.
La vanne peut disposer d'un connecteur électrique pour recevoir la commande active et/ou la vanne peut être alimentée électriquement à l'aide d'un connecteur électrique.

Le dispositif de filtration peut présenter une interface d'entrée qui fait saillie par rapport à la coque inférieure, de façon à former une projection saillante vers le bas, en direction opposée à la sortie prévue sur le couvercle formée par la coque supérieure.
Plus largement, une paroi de fond du boîtier peut s'étendre parallèlement au fond d'un bac ou réservoir d'huile, ou peut constituer une paroi de fond, fixe, appartenant à ce bac d'huile. Optionnellement, on peut prévoir des faces d'entrée de chacun des médias de filtration qui sont des faces inférieures de l'ensemble ou insert filtrant, orientées en regard de la paroi de fond. Lorsqu'un conduit formant la sortie est porté par un couvercle du boîtier, on comprend que les faces d'entrée peuvent être orientées vers le bas et/ou à l'opposé de la sortie (sortie typiquement formée dans un point haut de ce boîtier ou tout du moins adaptée pour que le flux épuré ressorte de façon ascendante de la zone d'aval délimitée par le boîtier).

Dans des formes de réalisation de l'ensemble ou insert, on prévoit au moins l'une des particularités suivantes :
- l'insert a une direction d'allongement suivant un axe central qui est parallèle à deux flancs extérieurs de l'insert, les flancs extérieurs délimitant des faces externes opposées de l'insert, entre lesquelles s'étendent les deux médias.
- l'insert a une périphérie de format généralement rectangulaire, avec un côté plus court qui est perpendiculaire la direction longitudinale/axiale (perpendiculaire à un axe central de l'insert).
- le premier média de filtration et/ou le deuxième média de filtration consiste en un média filtrant, par exemple sous forme de feuille et/ou d'une couche perméable à l'huile incluant de la cellulose ou matériau fibreux.
- la structure de la couche perméable peut être multicouche pour l'un et/ou l'autre des médias de filtration.
- le premier média de filtration et le deuxième média de filtration ont chacun une face supérieure, opposée à l'entrée, avec par exemple les deux faces supérieures qui sont parallèles et optionnellement coplanaires.
- chacun des deux médias permet à du lubrifiant circulant dans le boîtier d'être filtré en sortant du volume intérieur, par exemple plus haut que l'une ou l'autre des extrémités axiales de l'insert filtrant lorsque celui-ci est monté horizontalement dans le boîtier.
- la filtration dans chacun des médias est ascendante, suivant une direction d'éloignement de l'entrée, lorsque l'insert ou ensemble filtrant (incluant les deux médias) est monté horizontalement dans le boîtier.
- le premier média a une épaisseur préférentiellement inférieure à 5 mm.
- le deuxième média a une épaisseur préférentiellement inférieure à 5 mm.

Selon une option, le premier média et le deuxième média partagent deux flasques d'extrémité, formant des extrémités axiales de l'insert ou ensemble filtrant.
Selon une autre option, le premier média et le deuxième média s'étendent suivant des directions qui se croisent, sensiblement au niveau d'une des extrémités de l'insert ou ensemble filtrant. Dans ce dernier cas, un angle aigu supérieur à 5° et éventuellement inférieur ou égal à un seuil ne dépassant pas 45 ou 50°, par exemple avec un angle aigu inférieur ou égal à 35°, peut être formé à l'extrémité où se rejoignent les médias. Avec cette disposition, l'insert filtrant peut présenter une géométrie aplatie, compatible avec un boîtier aplati pour délimiter une chambre de filtration le long d'une paroi de fond d'un bac d'huile (qui est le bac d'huile de transmission).

Dans des réalisations, l'insert ou ensemble de filtration a :
- une hauteur ne dépassant pas 40 ou 50 mm, au moins une autre dimension dépassant 100 mm, éventuellement avec une dimension qui est supérieure ou égale à 120 mm ;
- une ouverture de format sensiblement rectangulaire pour délimiter l'entrée du boîtier ;
- un agencement formé par un cadre qui présente un plan de symétrie passant par le cadre, possiblement avec ce plan de symétrie qui coïncide avec une cloison séparant le premier média du deuxième média .

Dans des options de réalisation, il est prévu l'une ou l'autre des caractéristiques suivantes :
- le volume intérieur est cloisonné suivant une direction longitudinale/axiale.
- au moins un élément de traverse sert de support à une couche de l'un et/ou de l'autre des deux médias de filtration.
- l'au moins un élément de traverse est sous forme d'un flasque transverse sur lequel est collé/solidarisé une extrémité axiale du premier média et une extrémité axiale du deuxième média.
- le flasque est espacé latéralement sur un côté ou sur deux côtés opposés, par rapport au boîtier, de façon à ce que du lubrifiant puisse circuler latéralement dans le boîtier, entre l'ensemble ou insert filtrant et le média servant à la filtration, quel que soit la position de l'élément obturateur.
- l'espacement maximal entre les deux médias de filtration est inférieur à une moitié de la hauteur du volume intérieur (zone en aval de la filtration) de l'insert filtrant, de préférence inférieur ou égal à 14 mm.
- le premier média de filtration et le deuxième média de filtration ont sensiblement une même longueur.

Dans des modes de réalisation, le premier média de filtration et le deuxième média de filtration sont conçus séparément à partir de différents matériaux de filtration, de sorte qu'un de ces médias de filtration à une finesse de filtration supérieure à l'autre. Une finesse de filtration pour l'un au moins des médias de filtration peut être comprise entre 20 et 70 µm. Eventuellement l'épaisseur des deux médias de filtration est sensiblement la même, indépendamment de la finesse de filtration choisie.
L'un au moins des médias peut être à structure multicouche.

L'insert ou ensemble filtrant peut se souder ou se monter de manière amovible par une fixation mécanique. L'insert/ensemble filtrant peut comporter une partie d'étanchéité annulaire, cette partie d'étanchéité entourant par exemple les deux médias en étant formé sur un cadre de l'insert (par exemple avec une fixation de cette partie/joint dans une gorge). Eventuellement, le joint ou partie d'étanchéité peut être formé ou porté par le cadre et/ou fixée contre un épaulement externe du cadre.

Pour permettre la fixation amovible de l'insert/ensemble dans des options, le cadre peut porter des moyens de fixation formant des reliefs formés sur une circonférence extérieure du cadre et/ou orientés vers la deuxième extrémité de l'insert. Le cas échéant, le cadre peut porter un élément de fixation formant, en périphérie autour de l'entrée, au moins une gorge de retenue coopérant avec un moyen de fixation complémentaire prévu à l'entrée d'un boîtier de filtre de transmission.

Le cadre et/ou les deux flasques peuvent être formés à partir d'un matériau plastique, par exemple une matière thermoplastique rigide. Le cadre peut inclure un matériau plastique pour former un support de soudure et/ou de fixation mécanique pour le raccordement :
- d'un bord du premier média de filtration ; et
- d'un bord du deuxième média de filtration.

Il est proposé, selon un aspect de la présente divulgation, une utilisation du dispositif de filtration tel que présenté plus haut, en tant que filtre de transmission pour épurer une huile aspirée vers un dispositif de transmission,
dans laquelle le boîtier comporte une partition intérieure, dont au moins une partie appartient au corps répartiteur de la vanne, permettant de faire communiquer l'entrée soit avec la première zone d'amont, soit avec la deuxième zone d'amont, de sorte que le lubrifiant n'est filtré que par l'un des médias,
et dans laquelle l'élément obturateur est déplacé par une commande active prenant en compte au moins un capteur inclus dans ou relié au module de contrôle électronique, pour atteindre sélectivement l'une ou l'autre de deux positions extrêmes en étant interposé entre l'entrée et une extrémité de l'ensemble ou insert filtrant qui rassemble des extrémités respectives du premier média de filtration et du deuxième média de filtration.

Le dispositif de filtration peut être pourvu d'un boîtier unique délimitant deux chambres de filtration, le boîtier comprenant des nervures pour espacer chacune des lignes de pliage des deux médias d'une portion plane d'une coque constituant un composant de boîtier (appartenant au boîtier).
L'entrée est disposée, sur le boîtier, à un premier niveau de hauteur, le boîtier comprenant une sortie dont le débouché se situe plus haut (décalé plus haut) que l'entrée.

Selon des particularités du filtre, on peut prévoir :
- dans le boîtier, un élément détrompeur (formé dans/solidaire de ce boîtier) apte à coopérer avec un insert filtrant et/ou une des faces extérieures de l'insert, en permettant par exemple un guidage avant une fixation ou verrouillage du cadre de l'insert contre une extrémité de support qui fait partie du boîtier.
- dans le boîtier (en alternative à l'élément détrompeur ou en complément), une zone réceptrice à complémentarité de forme avec une partie d'insertion de l'insert filtrant.
- une paroi de fond du boîtier constituant une paroi fixe appartenant à un bac d'huile, de sorte que la première face extérieure formée par le premier média de filtration est une face inférieure de l'insert filtrant en regard de la paroi de fond.

On comprend que l'insert filtrant et les composants du filtre de transmission peuvent être disponibles sous forme d'un kit filtrant à monter sur le carter d'huile.
Dans des options, plusieurs médias peuvent être prévus dans une même chambre de filtration, en série ou en parallèle, pour participer à la filtration, lorsque l'élément obturateur libère l'accès au compartiment formant cette chambre de filtration.

### Brève description des dessins

D'autres caractéristiques, détails et avantages apparaîtront à la lecture de la description détaillée ci-après, et à l'analyse des dessins annexés, sur lesquels :
la figure 1 montre un filtre conforme à un mode de réalisation, dans une vue avec une coupe longitudinale qui peut correspondre à une coupe verticale dans un état monté du filtre avec la sortie évacuant le liquide filtré par le haut.
la figure 2A est une vue en perspective d'une partie d'un filtre de transmission pour purifier de l'huile avec une coupe transversale qui permet de visualiser deux médias de filtration juxtaposés latéralement à l'intérieur du boitier du filtre.
la figure 2B illustre, par une vue de dessous, un détail de l'entrée du filtre de transmission de la figure 2A, équipée d'un élément obturateur d'une vanne.
la figure 3 montre un exemple de montage, dans un boîtier de filtre à sortie supérieure prévue sur un couvercle, d'un insert filtrant pourvu d'une cloison séparant deux médias différents prévus dans l'insert.
la figure 4 est un diagramme schématique d'une transmission de véhicule dans laquelle peut être intégré un filtre tel que montré dans l'une quelconque des figures précédentes.
la figure 5 est une vue en perspective illustrant un exemple de filtre monté sur un carter d'huile, pouvant intégrer l'insert filtrant.
la figure 6 est un schéma représentatif d'un exemple de filtre/dispositif de filtration intégrant un insert filtrant et une vanne de sélection d'un des deux médias de cet insert.
la figure 7 est un schéma illustrant un exemple de vanne à commande active intégrant un matériau thermosensible.

### Description de mode(s) de réalisation

Ci-après un exposé détaillé de plusieurs modes de réalisation de l'invention assorti d'exemples et de référence aux dessins. Sur les différentes figures, des références identiques indiquent des éléments identiques ou similaires.

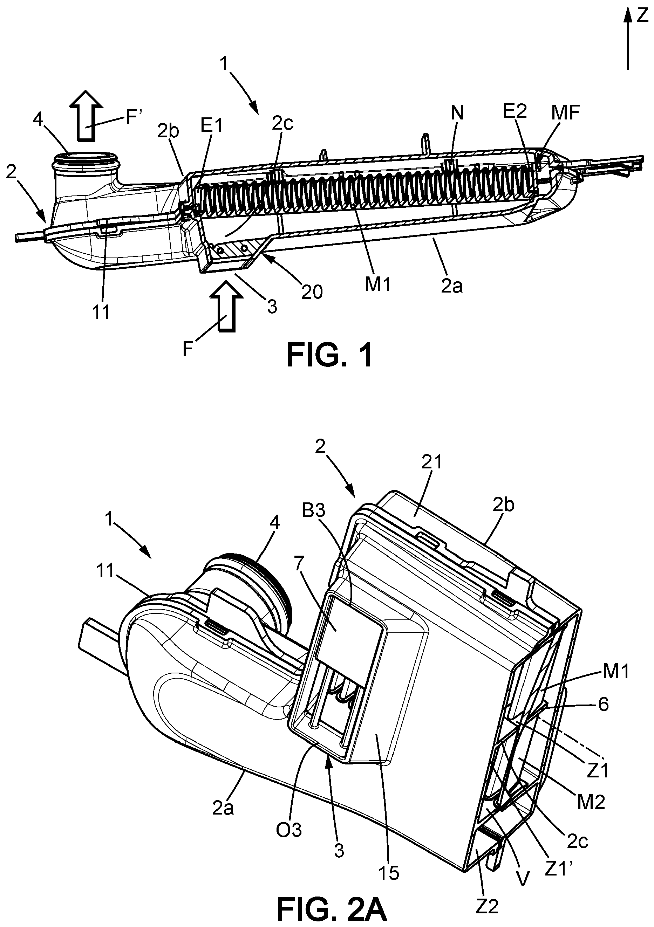

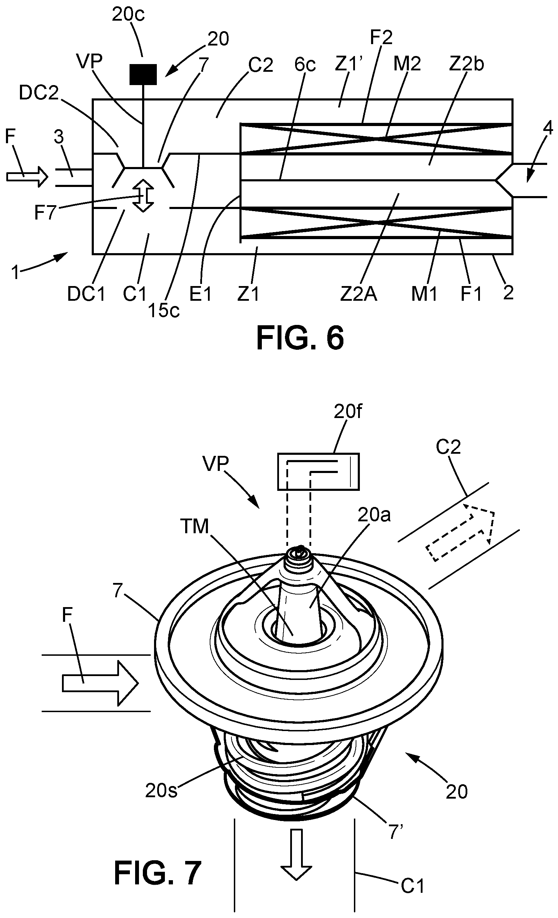

En référence aux figures 1, 2A et 6, il est illustré des formes de réalisation d'un dispositif 1 de filtration d'un lubrifiant (huile), qui constitue ici un filtre de transmission. Ce dispositif comporte un boîtier 2 logeant, dans un volume intérieur V, un premier média de filtration M1 et un deuxième média de filtration M2 qui peuvent constituer les moyens de filtration d'une unité qui s'insère dans le volume intérieur V.
Le dispositif 1 comporte, sur le boîtier 2, une entrée 3 pour un lubrifiant tel qu'une huile aspirée vers un dispositif de transmission. Le boîtier 2 porte ou inclut une vanne 20 permettant de diriger le flux F du lubrifiant, amené dans la volume intérieur V via l'entrée 3 vers deux chambres de filtration distinctes rassemblées dans le boîtier 2. Une sortie 4 est en outre prévue sur le boîtier 2 pour évacuer un flux F' de lubrifiant purifié. Pour permettre l'aiguillage, la vanne 20 présente un corps répartiteur avec une partition intérieure. Un élément obturateur 7, visible par exemple sur les figures 2A-2B et 6, est mobile et couplé fonctionnellement au corps répartiteur pour obturer l'un parmi deux accès ou passages prévus dans le corps répartiteur.

Le corps répartiteur peut faire partie d'une interface d'entrée 15, qui inclut l'entrée 3 et fournit deux débouchés O3', O3" ou DC1, DC2 distincts. Ainsi, le corps répartiteur de cette interface d'entrée 15 permet de faire communiquer l'entrée 3 :
- soit avec une première zone d'amont Z1 d'une première chambre de filtration, pour une filtration par le premier média de filtration M1 qui est un média interne de l'unité formant insert filtrant 10 ;
- soit avec une deuxième zone d'amont Z1' d'une deuxième chambre de filtration pour une filtration par le deuxième média de filtration M2 qui est un autre média interne de l'unité formant insert filtrant 10.
Sur la figure 6, on a représenté deux débouchés DC1, DC2 qui sont divergents et qui communiquent avec un même espace interne formant une antichambre, dans le boîtier 2. Dans le cas des figures 2A-2B, des débouchés O3', O3" sont agencés de façon parallèle et/ou disposés l'un à côté de l'autre, par exemple dans une interface d'entrée 15 qui forme une projection extérieure/saillante vers l'extérieur sur un composant de boîtier 2b qui peut inclure la portion de fond du boîtier. Dans tous les cas un élément obturateur 7 de la vanne 20 peut occuper une position d'obturation d'un accès au débouché O3', O3", DC1 ou DC2. Dans la forme de réalisation de la figure 2A, cette obturation est une obturation partielle de l'ouverture O3 qui empêche la filtration par le média M1, sachant que la partie de l'ouverture O3 d'accès non obturée, prévue dans l'entrée 3, s'étend alors jusqu'à un débouché O3" pour que le lubrifiant traverse/passe par à la deuxième zone d'amont Z1', via ce débouché O3". A contrario le débouché O3' menant à la première zone d'amont Z1 n'est pas accessible.

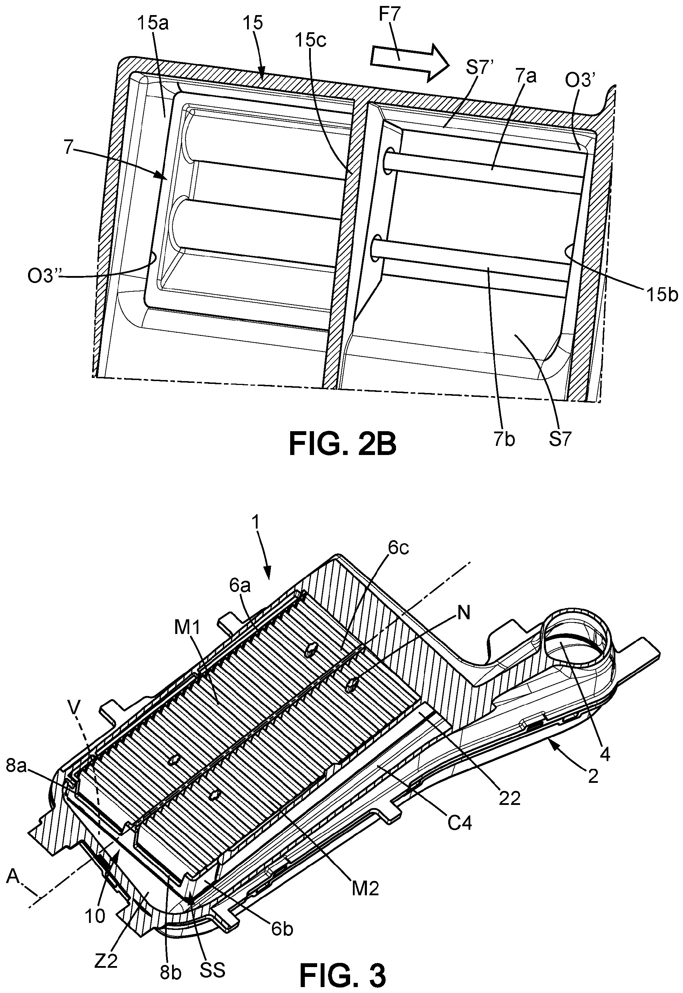

Dans l'exemple particulier des figures 2A et 2B, l'interface d'entrée 15 peut inclure un cadre qui présente deux côtés opposés 15a, 15b qui forment chacun une butée pour l'élément obturateur 7, ici monté coulissant sur un guide à deux barreaux 7a, 7b. Ces barreaux 7a, 7b peuvent former des entretoises entre les deux côtés 15a et 15b, avec l'élément obturateur par exemple monté comme un coulisseau sur ces deux barreaux 7a, 7b. Un nombre variable de barreaux ou parties de guidage similaires peuvent être utilisés dans des variantes. Dans la figure 2A qui montre le côté intérieur de l'interface d'entrée 15, on peut voir qu'une surface S7 peut élargir progressivement le tronçon d'entrée laissé libre par l'élément obturateur 7, de sorte que le débouché O3' est élargi/de plus grande section de passage que la section de passage du côté d'un bord externe B3 du cadre délimitant l'entrée 3. La même disposition est applicable pour le débouché O3" voisin, lui aussi prévu du côté intérieur élargi de l'interface d'entrée 15 (côté intérieur opposé au bord externe B3).
La surface S7 peut être une surface sensiblement plane et formant un angle, compris entre 100 et 150° par rapport au plan de la portion de fond du boîtier 2. Les surfaces S7, S7', en regard l'une de l'autre, forment des surfaces de contact avec l'élément obturateur 7 tout en permettant le coulissement suivant la direction de la flèche F7 et en sens inverse.

Dans la réalisation des figures 2A et 2B, le boîtier 2 peut inclure un élément de cloison 2c qui fait partie d'une séparation qui cloisonne le volume intérieur V. La séparation peut correspondre à un assemblage d'éléments séparateurs 2c, 6c, avec par exemple une portion séparatrice 15c de l'élément de cloison 2c qui s'étend jusque dans l'interface d'entrée 15 pour venir s'engager/en contact avec une portion d'un bord de contact annulaire (par exemple pour un contact étanche) de l'élément obturateur 7.
La séparation peut inclure en outre une cloison 6c qui fait partie de l'unité qui rassemble les deux médias de filtration M1 et M2, comme décrit ci-après.

En référence aux figures 1 et 3, l'unité peut être un insert filtrant 10 qui est allongé suivant une direction axiale, suivant l'axe longitudinal A qui traverse deux extrémités axiales opposées du boîtier 2, en traversant une paroi latérale 21 du boîtier 2.
La paroi latérale 21 du boîtier 2 entoure le volume intérieur V, en s'étendant suivant une direction Z (figure 1) qui peut correspondre à une direction verticale, sachant que le filtre de transmission formant le dispositif 1 comprend une portion de fond inférieure et une paroi supérieure en regard de la portion de fond. La paroi latérale 21 est à section/géométrie annulaire en s'étendant de la portion de fond à la paroi supérieure suivant la direction Z.

Comme bien visible sur les figures 2A, 3 et 6, le premier média M1 est séparé du premier média M2, par la séparation qui cloisonne le volume intérieur V, entre la première chambre de filtration et la deuxième chambre de filtration. Ces deux chambres peuvent être sous forme de compartiments allongés, parallèles à la direction axiale d'allongement de l'insert filtrant 10. Les médias M1, M2, qui sont par exemple plissés, ont chacun une face d'entrée respective F1, F2, orientée du côté de la zone d'amont Z1, Z1' correspondante.

L'insert filtrant 10 peut présenter un cadre formant tout ou partie d'une structure SS ou ossature de support des deux médias M1, M2. Outre un contour périphérique autour des deux médias M1, M2, une telle structure de support SS inclut la cloison 6c, comme bien visible sur les figures 2a, 3 et 6.
La cloison 6c peut être formée comme un longeron parallèle à la direction axiale de l'insert filtrant 10. Elle fait partie de la séparation (allongée axialement) entre les deux chambres de filtration et appartient à l'insert filtrant 10 qui est monté dans le volume intérieur V.

Plus généralement, le cadre ou structure de support SS peut inclure une première extrémité E1 axiale de l'insert filtrant 10 et une autre extrémité E2 axiale. Ces extrémités E1, E2 sont opposées l'une à l'autre suivant la direction axiale de l'axe longitudinal A. Cet insert filtrant 10 peut être interne par rapport au boîtier 8. Les deux médias de filtration M1, M2 peuvent correspondre à une structure filtrante relativement aplatie pour présenter une dimension minimale dans le sens de la direction Z perpendiculaire à l'axe longitudinal A de l'insert 10, cette direction Z étant une direction verticale. L'extrémité E1 peut être proche/proximale de l'entrée 3 et en appui, par exemple en appui étanche, contre un bord supérieur ou épaulement prévu dans le composant 2b du boîtier 2 qui inclut l'entrée 3. L'extrémité E2 est distale de cette entrée 3 suivant la direction axiale. Chacune des zones d'amont Z1 et Z1' peut être allongée entre ces deux extrémités E1, E2, sachant que l'élément séparateur formant la cloison 6c peut s'étendre de l'une à l'autre de ces deux extrémités E1, E2.

Sur la figure 3, l'insert filtrant 10 présente deux parois extérieures allongées 6a et 6b, parallèles, qui forment deux côtés longs du cadre ou structure de support SS. La cloison 6c peut former un élément intermédiaire parallèle à ces deux parois extérieures 6a, 6b, en étant jointive à la fois :
- par un bord inférieur de la cloison 6c, avec un composant de boîtier 2a pouvant former une coque inférieure du boîtier 2,
- par un bord inférieur de la cloison 6c, avec un autre composant de boîtier 2b tel qu'un couvercle, pouvant former une coque supérieure du boîtier 2.
On comprend que le bord supérieur de la cloison 6c peut s'étendre du côté des faces des médias M1, M2 par lesquelles le lubrifiant rejoint la zone d'aval Z2 de la filtration, qui est une zone (du volume intérieur V) en communication avec la sortie 4.

L'insert filtrant 10 peut être rigidement fixé à un composant formant un couvercle du boîtier qui est mobile (par rapport au reste du boîtier), pour être détaché ou déplacé afin de permettre le retrait et le montage de l'insert filtrant 10 lors d'une opération de rechange. Le déplacement du couvercle s'accompagne du déplacement de l'insert filtrant 10 en raison de cette solidarisation.
En référence à la figure 2A, sur le composant inférieur du boîtier 2a, complémentaire du composant formant couvercle 2b, il est par exemple prévu, sous forme de nervure saillante intérieurement par exemple, un élément de cloison 2c qui rejoint la cloison 6c par le dessous (en contact avec le bord inférieur de cette cloison 6c). Cet élément de cloison 2c appartient alors à ladite séparation en participant à la fonction de séparation étanche :
- du premier compartiment/première chambre de filtration du boîtier 2, recevant le lubrifiant admis via le passage d'accès formant le premier débouché O3' ou DC1,
- et du deuxième compartiment/deuxième chambre de filtration du boîtier 2, recevant le lubrifiant admis par le deuxième débouché O3" ou DC2 ;
et dans lequel les deux compartiments sont parallèles, en étant de même longueur et/ou allongés suivant la direction axiale.

### Fonction de sélection de la vanne

La vanne 20 est à commande active pour déplacer sélectivement l'élément obturateur 7, ou partie mobile analogue, dans l'interface d'entrée 15 en fonction d'un commande active. Le déplacement de la partie mobile de la vanne 20 est par exemple initié lorsqu'une modification d'une condition de fonctionnement (reflétée par au moins un paramètre) est détectée, typiquement par un capteur. Plus largement, la vanne 20 est conçue et agencée pour permettre de sélectionner, dans le boîtier 2, le compartiment ou chambre de filtration servant à réaliser la filtration du flux F de lubrifiant reçu par l'entrée 3. L'élément obturateur 7 est par exemple monté dans le boîtier 2 en pouvant occuper une première position et une deuxième position. La première position peut permettre l'obturation complète du deuxième débouché O3" ou DC2. Inversement, la deuxième position peut permettre l'obturation complète du premier débouché O3' ou DC1. L'actionnement du déplacement de l'élément obturateur 7 peut être commandé électriquement, directement en utilisant une électrovanne

Par cette sélection, le flux F' de lubrifiant évacuée par la sortie 4, comme illustré sur la figure 1, peut ne passer que par le deuxième média de filtration M2 lorsque l'élément obturateur 7 occupe la deuxième position visible sur la figure 2A. Le lubrifiant peut longer la séparation (2c, 6c) sans la traverser. La sortie 4 peut communiquer, soit avec une zone d'aval Z2 commune aux deux médias M1, M2, par exemple dans un espace situé au-dessus de ces médias M1, M2 lorsque la sortie 4 est disposée plus haut que l'entrée 3 (typiquement verticalement à l'opposé de l'entrée 3) et plus haut que la jonction 11 entre les deux composants 2a, 2b du boîtier 2.

La vanne 20 peut être pourvue d'une liaison avec un module de contrôle 20c et commandée de manière active via cette liaison. Avec l'agencement séparé des deux médias M1, M2 pour permettre une filtration de manière indépendante entre ces deux médias, la vanne 20 peut utiliser un capteur relié à une commande électrique pour permettre de sélectionner vers quel média M1 ou M2 l'huile va être amenée à être filtrée, via la sélection de la zone d'amont Z1 ou Z1' correspondante. Dans des formes de réalisation, le capteur peut inclure une sonde de température et/ou une sonde de pression (sonde sensible à la pression/sonde de mesure de pression).

Lorsque l'insert filtrant 10 présente un cadre enfermant les deux médias M1, M2 (typiquement plissés comme dans la figure 3), deux compartiments du volume intérieur V sont définis et la vanne 20 peut éventuellement se monter dans ou contre la séparation (2c, 6c) qui sépare ces deux compartiments.
L'élément obturateur 7 peut coulisser en réponse à une force d'actionnement. Dans certaines options, un élément de rappel peut être inclus dans la vanne 20 pour solliciter l'élément obturateur vers une position par défaut. Comme dans le cas des figures 2A et 2B, l'élément obturateur 7 peut être un clapet qui va coulisser entre deux positions à l'aide d'une électrovanne.

Une partie mobile de la vanne 20, reliée à l'élément obturateur 7, peut inclure un matériau expansible, par exemple une cire qui permet un déplacement de l'élément obturateur en réponse à une augmentation de température de la cire/matériau expansible. Un capteur de contrôle de la température peut être prévu.
Dans une réalisation avec un matériau thermosensible, une sonde de température peut être reliée à l'élément obturateur 7 en étant disposée au niveau de l'entrée 3 pour le lubrifiant ou avant l'entrée 3 (par exemple dans l'espace d'accumulation/réservoir de lubrifiant).

En sus ou en alternative, la vanne 20 peut être commandée de façon active en réponse à une détection ou commande produite par un capteur de contrôle de la pression. Par exemple, ce capteur peut détecter une chute de pression qui peut par exemple se produire dans une situation de démarrage à froid. Une telle détection déclenche le changement de position de l'élément obturateur 7 pour permettre une filtration par le deuxième média M2 lorsque ce dernier est mieux adapté à la condition détectée/contexte de fonctionnement, par exemple représentative d'un démarrage à froid. Le deuxième média M2 peut ainsi différer du premier média M1 en ce qu'il a une filtration moins fine et/ou permet d'améliorer la performance d'écoulement à froid.

En sus ou en alternative, la vanne 20 peut être commandée par un capteur de contrôle électrique, possiblement adapté pour relayer une commande qui est centralisée dans le véhicule ou qui provient d'une unité de contrôle éloignée/extérieure (extérieure au filtre de transmission). Quel que soit le mode d'actionnement, une liaison de commande est ainsi prévue pour permettre de contrôler le déplacement de l'élément obturateur 7, qui n'est pas un déplacement subi/passif.

En référence la figure 2B, la flèche F7 illustre un exemple de déplacement de l'élément obturateur 7 pouvant être initiée en réponse à la commande active. Ici, l'élément obturateur 7 est porté par le boîtier 2, sans contact avec l'insert filtrant 10. Dans des variantes, l'élément obturateur 7 peut être porté par l'ensemble ou insert de filtration 10.
La figure 2B illustre deux débouchés O3, O3" permettant chacune l'accès sélectif à l'une parmi la première zone d'amont Z1 et la deuxième zone d'amont Z1'. Ces deux débouchés O3, O3" sont ici formés à l'extrémité intérieure d'un conduit ou cadre de l'interface d'entrée 15, sachant que l'ouverture O3 délimitée par le bord extérieure B3 de ce cadre peut être obturée pour moitié lorsque l'élément obturateur 7 a une profondeur sensiblement égale à l'extension de ce conduit de l'entrée 3.

### Option avec la vanne préassemblée avec un composant de boîtier

Le réceptacle constitutif du boîtier 2 présente une paroi inférieure qui fait partie d'un composant de boîtier 2a à ouverture large pas le dessus en formant ici une coque inférieure. L'élément obturateur 7 peut être porté par ce composant 2a inférieur, comme dans le cas des figures 1 à 2B. La paroi supérieure du boîtier 2 (ici formée par un couvercle C ou partie analogue incluant le composant 2b avec une paroi d'obturation du volume intérieur V) peut être sous forme de coque supérieure portant la sortie 4 et munie de plusieurs nervures N intérieures ou éléments écarteurs assurant une fonction d'espacement entre chaque face supérieure des médias M1, M2 et la paroi supérieure du boîtier 2, ce qui permet au lubrifiant filtré de s'écouler dans la zone d'aval Z2 jusqu'à la sortie 4.
Plus largement, le montage de la vanne 20 avec son élément obturateur 7 peut être réalisé par un pré-assemblage sur l'un des composants du boîtier 2a ou 2b, qui est réalisé avant la fixation entre eux des composants 2a et 2b. La fixation, périphérique, peut résulter d'un emboîtement avec l'utilisation d'un ou plusieurs clips. L'insert filtrant 10 peut recouvrir la vanne 20 préassemblée avec le composant 2a qui inclut l'entrée 3 en étant disposée de manière sous-jacente au composant 2b, donc en étant intercalée entre ces deux composants 2a, 2b à l'état monté comme dans le cas de la figure 1.

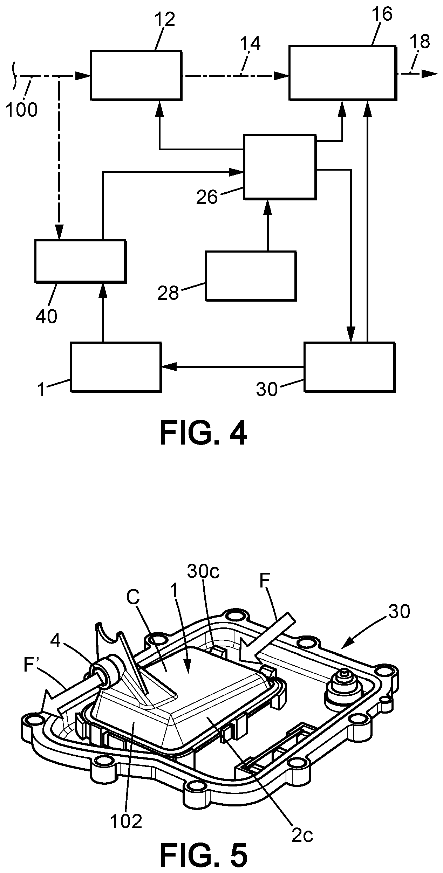

En référence à la figure 5, des moyens de verrouillage, par exemple des clips 30c élastiquement déformables, peuvent être prévus pour s'opposer à un accès et/ou un retrait de l'insert filtrant 10. Une partie du cadre ou de sa paroi latérale, dans la structure de support SS peut être agencée pour s'intégrer dans une interface de liaison du couvercle/composant 2b, éventuellement en utilisant les clips 30c pour simultanément retenir le couvercle C et maintenir l'insert filtrant 10 dans sa position opérationnelle insérée dans le volume intérieur V. Alternativement ou en complément, au moins un verrou solidaire du boîtier 2 ou du carter 30 peut être mobile/actionnable pour bloquer la position opérationnelle de l'insert filtrant 10. Dans des options, la hauteur (suivant la direction Z) du boîtier 2 peut varier, sélectivement du côté d'une extrémité E1 de l'insert filtrant 10. Le cas échéant, cette hauteur est localement agrandie par une projection inférieure formant l'entrée 3 et/ou par une dimension verticale plus grande pour un côté axial 102 du composant 2b, comparativement au côté axial opposé suivant la direction de l'axe longitudinal A.

La vanne 20 peut se situer dans l'interface d'entrée 15, sans s'étendre dans une zone d'aval Z2, Z2a ou Z2b. Chaque zone d'aval Z2 peut correspondre à une zone du volume intérieur V qui communique avec la sortie 4. Dans le cas de la figure 3, il est illustré une zone Z2 d'aval qui contourne latéralement l'insert filtrant 10, depuis l'extrémité E2 qui présente des ouvertures respectives 8a et 8b :
- l'ouverture axiale 8a qui permet au lubrifiant filtré par le premier média M1 de ressortir axialement à l'opposé de l'entrée 3 et l'extrémité E1 ; et
- l'ouverture axiale 8b qui permet au lubrifiant filtré par le deuxième média M2 de ressortir axialement à l'opposé de l'entrée 3 et l'extrémité E1.
Un canal d'écoulement C4 pour le lubrifiant filtré peut être délimité entre une paroi externe du boîtier 2 et une paroi interne, ici un flanc allongé 22 du composant 2b, fixée et accolée à un côté long de l'insert filtrant 10. Ce canal d'écoulement C4 fait partie d'une zone d'aval Z2 qui permet la circulation du lubrifiant filtré, quelle que soit la position de l'élément obturateur 7. La sortie 4 permet de remonter l'huile épurée vers une pompe 40 (figure 4).

Le filtre 1 de transmission peut être monté sur un carter d'huile 30 ou être disposé sur une région réceptrice inclue dans une paroi de fond d'un tel carter d'huile 30, comme dans le cas de la figure 5 par exemple. En référence à la figure 4, il est illustré schématiquement un système de transmission. Les lignes en traits mixtes indiquent un transfert de puissance mécanique, tandis que les lignes en traits pleins représentent un flux de fluide de lubrification. Les lignes en pointillés indiquent les signaux électriques. L'arbre d'entrée de la transmission 100 est relié au vilebrequin du véhicule. La puissance du moteur est transmise au convertisseur de couple 12 qui entraîne l'arbre de turbine 14. Les embrayages de la boîte de vitesses 16 (exemple de dispositif de transmission au sens de la présente divulgation) sont enclenchés pour établir un flux de puissance entre l'arbre de turbine 14 et l'arbre de sortie 18.

Différents circuits de flux de puissance ayant différents rapports de vitesse peuvent être établis en engageant différents embrayages. Optionnellement, une boîte de transfert peut être installée entre l'arbre de sortie et un arbre de transmission pour dévier une partie de la puissance vers un différentiel.
Une partie de la puissance du moteur est détournée pour entraîner la pompe 40 de transmission. La pompe 40 de transmission peut aspirer l'huile ou fluide lubrifiant similaire du carter 30, à travers le filtre 1, et délivre le fluide épuré, à une pression accrue, au corps de valve 26. La pression à laquelle ce fluide pénètre dans le corps de valve est généralement appelée pression de fluide ou pression de ligne. Un contrôleur 28 commande un réseau de vannes de contrôle à l'intérieur du corps de valve 26 pour envoyer le fluide aux composants du convertisseur de couple 12 et de la boîte de vitesses 16 à des pressions souhaitées inférieures à la pression de ligne et à des débits souhaités. Le fluide s'écoule des vannes de commande et de la boîte de vitesses 16 vers le carter 30.

### Exemples de structure de l'insert filtrant

En référence aux figures 1 et 3, l'insert filtrant 10 peut présenter deux flancs 6a, 6b, solidarisés rigidement/fixement au boîtier 2 et qui s'étendent de la première extrémité E1 jusqu'à la deuxième extrémité E2. Ces flancs 6a, 6b peuvent être parallèles ou tout du moins délimiter sur deux côtés opposés une sous-partie de l'espace intérieur V sans variation significative de la largeur (écartement) mesurée entre les deux flancs 6a, 6b. par exemple inférieure à une plus petite largeur de couche des moyens de filtration 3, 3'.

Une liaison à chaud peut être réalisée pour solidariser les médias M1, M2 de filtration à l'ossature/structure SS dont font partie les deux flancs 6a, 6b. Dans des variantes, on peut aussi prévoir de fixer séparément le premier moyen de filtration 3 et le deuxième moyen de filtration 3'.

En référence à nouveau aux figures 2A et 3, on peut voir que la largeur des médias M1, M2 est la même et peut être constante. Le matériau de l'ossature/structure SS de l'insert filtrant 10 peut consister en un seul plastique pour faciliter un recyclage ultérieur. Le cadre inclut ou consiste par exemple en un matériau plastique permettant de former un support de soudure et/ou de fixation mécanique pour le raccordement du bord du premier média de filtration M1 qui s'étend de l'une à l'autre des extrémités E1 et E2, ainsi que pour le raccordement du bord du deuxième média de filtration M2 qui s'étend de l'une à l'autre des extrémités de flanc E1 et E2.

La cloison 6c peut définir un plan de symétrie de l'insert filtrant 10. Dans l'exemple illustré sur la figure 6, on peut prévoir un insert filtrant qui délimite une zone centrale pour délimiter les deux zones d'aval Z2a et Z2b qui sont séparées par la cloison 6c divisant cette zone centrale en définissant éventuellement un plan de symétrie de l'insert filtrant 10. Dans ce cas, la vanne 20 être optionnellement portée par un flasque incluant l'extrémité E1 axiale qui supporte deux extrémités respectives des médias M1 et M2. Ce flasque coopère alors avec l'entrée 3 pour former l'interface d'entrée.
Un élément de cloison 15c de cette interface d'entrée peut séparer les deux zones d'amont Z1 et Z1'. La vanne 20 peut être ici une vanne sensible à la température et/ou à la pression, en disposant d'un module de contrôle 20c pour permettre de recevoir une commande active. Une telle commande peut par exemple convertir une détection d'un changement d'une condition de température et/ou de pression en un déplacement de l'élément obturateur 7 (flèche F7) pour passer :
- d'une filtration par le média M1 à une filtration par le média M2,
- ou inversement.

Deux antichambres ou zones d'amenée C1, C2 peuvent être séparées l'une de l'autre par l'élément de cloison 15c ou un ensemble à cloisons de la vanne 20. Bien qu'on a représenté un seul élément obturateur 7 pour minimiser le nombre de pièces, par exemple en ayant recours à une tige de guidage liée à la portion d'obturation de l'élément 7, on peut prévoir d'autres réalisations. Eventuellement, une partie mobile à deux éléments obturateurs distincts peut être utilisée pour libérer et respectivement obturer les accès DC1 ou DC2. Ou encore deux éléments obturateurs séparés peuvent permettre de réaliser l'obturation pour ne filtrer le lubrifiant que par un seul média M1 ou M2, possiblement en coordonnant des deux éléments pour que :
- l'un soit en position de fermeture de l'accès/débouché DC1 lorsque l'autre est en position de libération de l'accès/débouché DC2,
- et vice versa.
Il est également permis d'utiliser une vanne à deux clapets 7, 7'.

En référence à présent à la figure 7, dans le cas d'une vanne 20 qui est thermosensible, un thermostat à commande électrique peut être optionnellement prévu avec l'utilisation d'une cire ou matériau thermosensible TM dont le volume varie en fonction de la température. Le thermostat à commande électrique permet alors de contrôler la température de la cire ou autre matériau similaire apte à faire varier son volume en fonction de la température (matériau expansif).
Plus généralement, on peut utiliser des clapets 7, 7' dont la position est ajustable à l'aide d'un ressort 20s ou élément de rappel élastique similaire et d'une partie sensible à la température ou la pression. Dans un corps répartiteur de la vanne 20, prévu dans l'interface d'entrée, on peut prévoir que les zones d'amenée C1, C2 formant des entrées respectives de la première zone d'amont Z1 et de la deuxième zone d'amont Z1' sont obturables :
- l'une par une première partie d'obturation de la vanne 20, formée par l'élément obturateur 7', pour obturer le débouché DC1 et couper l'accès à la zone d'amont Z1 (débouché correspondant obturé) en l'absence de circulation dans la zone d'amenée C1 ;
- l'autre par une deuxième partie d'obturation de la vanne 20, formée par l'élément obturateur 7, pour obturer le débouché DC2 et ainsi couper l'accès à la zone d'amont Z1' en l'absence de circulation dans la zone d'amenée C2.

Dans des exemples, comme reflété par la figure 7 de manière non limitative, le thermostat peut faire partie de la vanne 20 à commande active. Une partie d'actionnement du positionnement VP peut être couplée fonctionnellement à la partie mobile avec chaque élément obturateur 7, 7' pour permettre l'obturation souhaitée en fonction de la commande active. Dans des options, un élément chauffant, comme par exemple une bobine chauffante qui entoure une capsule de cire, peut être allumé pour réaliser le déplacement d'un élément obturateur 7 ou 7', sachant qu'une fiche de connexion 20 peut servir à transmettre la commande de contrôle pour modifier la température de la cire.
Plus largement, la vanne 20 peut être dépourvue d'élément motorisé (absence de moteur pas à pas par exemple). La vanne 20 peut être intégrée de façon compacte. Le module de contrôle 20c, ici électronique, peut inclure/être relié à un capteur immergé dans le lubrifiant à proximité de ou dans l'entrée 3.

Chaque élément obturateur 7 peut être prévu pour se déplacer linéairement, par exemple pour coulisser, suivant un déplacement transverse par rapport à une direction d'écoulement du lubrifiant au travers de l'entrée 3, comme dans le cas montré sur la figure 2A ou 6. La partie mobile de la vanne 20 peut être entièrement intégrée dans le volume intérieur V du boîtier 2.

Dans des applications pour des véhicules à motorisation électrique ou hybride (thermique et électrique), le filtre ou dispositif 1 de filtration peut équiper une partie d'un système combinant différents modules, par exemple en complétant le système 3-en-1 « eAxle » (essieu électrique) qui combine un moteur électrique, un onduleur et un réducteur, typiquement dans une enveloppe commune. Le dispositif 1 peut aussi faire partie d'un système de gestion de l'alimentation en huile pour la transmission, pour le moteur électrique et/ou pour le refroidissement de la batterie. L'insert filtrant 10 peut typiquement être monté dans un filtre agencé près du fond du carter d'huile, au sein d'un tel système. La forme aplatie de l'insert 10 le rend suffisamment compact pour s'intégrer (déjà monté ou non dans un boîtier 2 de filtre) dans un compartiment d'un système de ce genre, par exemple dans un compartiment inférieur ou région basse d'un système intégré qui dispose de différents modules.
Une partie de refroidissement peut aussi être ajoutée dans le système. Une utilisation du filtre 1 équipant un système 3-en-1 comme susmentionné ou autre système multi-composants similaire, qui forme un ensemble à enveloppement compact au-dessus du bac d'huile, est permise avec une efficacité de filtration optimisée au regard des situations défavorables, de manière compatible avec une optimisation/réduction de l'encombrement.

Un des avantages de l'agencement du dispositif 1 est d'offrir un média de filtration adapté aux conditions par une sélection qui peut être réalisée de manière rapide, typiquement en temps réel, optionnellement avec une flexibilité dans le choix de la finesse de filtration au moins pour l'un des médias de filtration M1, M2. Il est permis de protéger la pompe 40 devant recevoir le flux F' d'huile épurée en minimisant les pertes de charge, tout en conservant une conception aplatie de filtre/dispositif 1 et une adaptation à des conditions de fonctionnement à froid/défavorables.

La présente divulgation ne se limite pas aux modes de réalisation décrits ci-avant, seulement à titre d'exemple, mais elle englobe toutes les variantes que pourra envisager l'homme de l'art dans le cadre de la protection recherchée.

## Revendications

1. Dispositif (1) de filtration de lubrifiant, en particulier filtre de transmission, disposant d'un ensemble ou insert filtrant (10) qui est de préférence allongé suivant une direction axiale, le dispositif (1) comprenant :
- un boîtier (2) délimitant un volume intérieur (V), le boîtier (2) étant pourvu d'une entrée (3) et d'une sortie (4) ;
- un premier média de filtration (M1) disposé dans le volume intérieur (V) ;
- un deuxième média de filtration (M2) disposé dans le volume intérieur (V) ;
- dans le volume intérieur (V), deux zones d'amont (Z1, Z1') en communication avec l'entrée (3), en incluant une première zone d'amont (Z1) permettant au lubrifiant de rejoindre une face d'entrée (F1) dudit premier média (M1) depuis l'entrée (3), et une deuxième zone d'amont (Z1') permettant au lubrifiant de rejoindre une face d'entrée (F2) dudit deuxième média (M2) depuis l'entrée (3) ;
- une séparation (2c, 6c, 15c) séparant le premier média de filtration (M1) du deuxième média de filtration (M2) en séparant de façon étanche la première zone d'amont (Z1) de la deuxième zone d'amont (Z1') ; et
- dans le volume intérieur (V), au moins une zone d'aval (Z2 ; Z2a, Z2b) en communication avec la sortie (4) et permettant au lubrifiant filtré (F') par l'un ou l'autre des premier et deuxième médias de filtration (M1, M2) de circuler jusqu'à la sortie (4) ;
le deuxième média de filtration (M2) présentant une structure et/ou au moins une propriété de filtration différente du premier média de filtration (M1),
**caractérisé en ce que** le dispositif (1) comporte une vanne (20) de sélection de l'un parmi le premier média de filtration (M1) et le deuxième média de filtration (M2), la vanne (20) disposant d'un corps répartiteur et étant :
- intégrée dans une interface d'entrée (15), qui inclut l'entrée (3) et le corps répartiteur pour faire communiquer sélectivement l'entrée (3) avec l'un ou l'autre de deux débouchés divergents (O3', O3" ; DC1, DC2) prévus dans l'interface d'entrée (15) ;
- pourvue d'une liaison avec un module de contrôle (20c) et commandée de manière active via cette liaison ; et
- pourvue d'un élément obturateur (7), porté par le boîtier (2) et/ou par ledit ensemble ou insert filtrant (10), l'élément obturateur (7) étant mobile pour permettre alternativement d'obturer et libérer un passage d'accès, qui est un premier des deux débouchés (O3', DC1) permettant l'accès sélectif à l'une parmi la première zone d'amont (Z1) et la deuxième zone d'amont (Z1').

2. Dispositif selon la revendication 1, dans lequel la position d'obturation dudit passage d'accès par l'élément obturateur (7) est obtenue comme une première configuration de sélection de la vanne (20), en réponse à une commande active délivrée via la liaison, la commande active étant délivrée en fonction d'un signal ou élément d'information fourni par un capteur de température et/ou un capteur de pression.

3. Dispositif selon la revendication 2, dans lequel l'élément obturateur (7) est déplaçable, en réponse à une autre commande active délivrée via la liaison, depuis la position d'obturation dudit passage d'accès formant le premier débouché vers une autre position pour l'obturation du deuxième débouché (O3" ; DC2) des deux débouchés, cette autre position étant obtenue comme une deuxième configuration de sélection de la vanne (20).

4. Dispositif selon l'une quelconque des revendications précédentes, dans lequel une cloison (6c) de ladite séparation (2c, 6c, 15c) est allongée suivant la direction axiale et appartient à l'ensemble ou insert filtrant (10) qui est monté dans le volume intérieur (V), de préférence en étant rigidement fixé à un couvercle du boîtier qui est mobile pour être détachée d'un composant de boîtier (2a) complémentaire du couvercle.

5. Dispositif selon l'une quelconque des revendications précédentes, dans lequel le boîtier (2) comporte un composant de boîtier (2a) qui présente :
- une paroi latérale (21) périphérique qui s'étend autour du volume intérieur (V) ; et
- un élément de cloison (2c), appartenant à ladite séparation (2c, 6c, 15c), qui est complémentaire de ladite cloison (6c) pour séparer un premier compartiment du boîtier recevant le lubrifiant admis via le passage d'accès formant le premier débouché, d'un deuxième compartiment du boîtier recevant le lubrifiant admis par le deuxième débouché ; et dans lequel les deux compartiments sont parallèles, en étant de même longueur et/ou allongés suivant la direction axiale.

6. Dispositif selon l'une quelconque des revendications précédentes, dans lequel l'élément obturateur (7) est sous forme d'un clapet coulissant entre deux positions et déplacé à l'aide d'une électrovanne ou d'un organe d'entraînement couplé à une partie thermosensible (TM) ou sensible à la pression,
et dans lequel le clapet coulisse suivant un déplacement transverse par rapport à une direction d'écoulement du lubrifiant au travers de l'entrée (3).

7. Dispositif selon l'une quelconque des revendications précédentes, dans lequel le boîtier (2) comporte une coque supérieure incluant la sortie (4) et formant un couvercle (2b), l'entrée (3) étant prévue sur une coque inférieure qui délimite l'une et l'autre des première et deuxième zone d'amont (Z1, Z1'),
et dans lequel l'élément obturateur (7) est monté coulissant dans la coque inférieure, qui forme de préférence un composant de fond (2a) du boîtier (2).

8. Dispositif selon l'une quelconque des revendications 1 à 7, dans lequel le corps répartiteur de la vanne (20) définit une entrée (3) qui est sous forme de conduit qui inclut une séparation intérieure pour former les deux débouchés (O3', O3") avec une même orientation générale, la séparation intérieure étant coplanaire avec la séparation (2c, 6c, 15c).

9. Dispositif selon l'une quelconque des revendications 1 à 7, dans lequel le corps répartiteur de la vanne (20) présente deux parois :
- qui délimitent entre elles une antichambre, formée dans le volume intérieur (V) ;
- dont l'une inclut le premier débouché (DC1) et l'autre inclut le deuxième débouché (DC2) qui a une orientation divergente de l'orientation du premier débouché (DC1).

10. Dispositif selon l'une quelconque des revendications précédentes, dans lequel le premier média de filtration (M1) et le deuxième média de filtration (M2) sont séparables l'un de l'autre au sein de l'ensemble ou insert filtrant (10), qui inclut de préférence deux cadres séparables, en étant juxtaposés l'un à côté de l'autre dans un état monté de l'ensemble ou insert filtrant (10) dans le volume intérieur.

11. Dispositif selon l'une quelconque des revendications précédentes, dans lequel la vanne (20) de sélection est une vanne à commande active pourvue d'un actionneur du déplacement de l'élément obturateur (7), l'actionneur étant choisi parmi :
- un actionneur de déplacement sensible à la température ;
- un actionneur de déplacement sensible à la pression ;
- un actionneur de déplacement à commande électrique.

12. Utilisation du dispositif de filtration (1) selon l'une quelconque des revendications précédentes, en tant que filtre de transmission pour épurer une huile aspirée vers un dispositif de transmission,
dans laquelle le boîtier (2) comporte une partition intérieure, dont au moins une partie appartient au corps répartiteur de la vanne (20), permettant de faire communiquer l'entrée (3) soit avec la première zone d'amont (Z1), soit avec la deuxième zone d'amont (Z1'), de sorte que le lubrifiant n'est filtré que par l'un des médias (M1, M2),
et dans laquelle l'élément obturateur (7) est déplacé par une commande active prenant en compte au moins un capteur, pour atteindre sélectivement l'une ou l'autre de deux positions extrêmes en étant interposé entre l'entrée (3) et une extrémité de l'ensemble ou insert filtrant (10) qui rassemble des extrémités respectives du premier média de filtration (M1) et du deuxième média de filtration (M2).
